# EUROPEAN PATENT SPECIFICATION

(11) **EP 3 698 853 B1**
(45) Date of publication and mention of the grant of the patent: **05.08.2026**
(21) Application number: 20156845.8
(22) Date of filing: 12.02.2020
(51) Int. Cl.: A62C 2/06, F16L 5/04

(54) **ASSEMBLY OF A WALL AND FIRE COLLAR**
MONTAGE EINER WAND UND EINES BRANDSCHUTZKRAGENS
ENSEMBLE COMPRENANT UNE PAROI ET UN COLLIER COUPE-FEU

(30) Priority: 13.02.2019 BE 201905091
(43) Date of publication of application: 26.08.2020
(73) Proprietor: Rf-Technologies nv, 9860 Oosterzele (BE)
(72) Inventor: VANDERSTRAETEN, Bart, 9860 Moortsele (BE); D'HAESE, Jonas, 9340 Oordegem (BE); VALCKE, Stijn, 9230 Westrem (BE); STEENLAND, Mathieu, 1703 Schepdaal (BE)
(74) Representative: Gevers Patents

(56) References cited:
- WO-A1-2016/167956
- WO-A2-2010/112851
- DE-U1- 9 418 172

## Description

The present invention relates to an assembly of a wall and a fire collar, wherein the wall comprises a passage and the fire collar is configured to extend in this passage, wherein the fire collar is configured to envelop a plastic tube which extends through this passage and comprises intumescent material which is expandable in case of fire in order to squeeze this plastic tube shut, wherein the assembly comprises a filling agent for filling the space between the wall and the fire collar which extends in the passage wherein the filling agent has a minimum degradation temperature which is between 50°C and 150°C.

The present invention also relates to a method for fire-resistant fitting a plastic tube through a passage of a wall, wherein a fire collar comprising intumescent material which is expandable in case of fire is provided and this fire collar is fitted around the tube for squeezing the plastic tube shut in case of fire, wherein the fire collar is fitted in the passage, and the space between the fire collar and the wall which extends in the passage is filled with a filling agent.

A fire collar is installed around a plastic tube which extends through a passage of a wall and this in order to seal this tube in case of fire for a prescribed time in a fireproof and smoke-tight manner. It is also important that a fire collar does not allow excessive temperature increases. This plastic tube may be, for example, a cylindrical tube with a circular cross section. However, this tube may also be in the form of a beam and have a rectangular cross section. Such a tube is also referred to by the term 'duct'. The wall may be, for example, a wall, a ceiling or a floor, wherein this wall is preferably made from one or more materials having a degree of fire resistance, such as concrete, bricks, plaster, mortar, etc. According to the European classification based on NBN EN 13501-1, these one or more materials with a degree of fire resistance preferably have the fire class A1 or A2 and are denoted as non-flammable materials. The fire collars comprise intumescent material. Intumescent material is a material which swells/expands on account of heat and the volume of which thus increases on account of heat. Furthermore, the fire collars usually comprise a body which is configured to envelop and retain the intumescent material. This body is then made from a material with a degree of fire resistance, such as steel, for example standard steel or stainless steel, so that the body will not degrade in case of fire, or only to a small degree. **In** case of fire, the temperature increases and the intumescent material will start to expand in the direction of the tube which the fire collar surrounds and thus start to constrict/squeeze the tube shut, so that the fire cannot proceed via the tube. Since the tube is made from plastic, the tube will soften as a result of the increase in temperature which accompanies a fire, as a result of which it is easily compressible by the expanding intumescent material. It is thus ensured by means of the fire collar that a wall made from a fire-resistant material will for some time prevent fire penetration, even if a plastic tube is fitted through this wall.

The above-described fire collars are preferably configured to be built into the wall and are thus installed in the passage of the wall and are therefore also referred to by the term built-in fire collars. The space between the fire collar and the wall which extends in the passage, is filled with mortar or plaster in order to close this space in a fire-resistant manner. The use of built-in fire collars is seen as aesthetic, since these collars are hardly visible, if at all, and thus have no, or little, effect on the appearance of the wall. However, since built-in fire collars are situated in the wall and the wall will not heat up quickly in case of fire, as this is usually made from fire-resistant materials, the intumescent material will not heat up quickly either, and thus it will take some time in case of a fire before the intumescent material will start to expand. This means that, in case of fire, the tube is not squeezed shut quickly and that there is therefore a risk of fire extension through the tube. Therefore, built-in fire collars do not meet high fire safety requirements. An additional problem with built-in fire collars is the fact that the space between the wall and the fire collar has to be sealed using a material which has a certain degree of fire resistance, such as plaster or mortar. Plaster and mortar have to dry out, as a result of which the installation of plastic tubes through a wall takes some time. Also, plaster and mortar have to be made in situ. DE 9418172 U1 describes such an assembly where mortar or concrete is used to ensure a certain degree of fire resistance between the wall and the fire collar.

In order to satisfy higher fire safety standards, surface-mounted fire collars are usually used. In that case, a surface-mounted fire collar is placed around the tube on each side of the wall, so that the tube is closed off, irrespective of which side of the wall a fire develops. In this case, however, two fire collars are required and these fire collars are visible in their entirety. Fire collars have also been developed which are configured to be partly built in. However, these are also less aesthetically pleasing and are often larger than the existing built-in fire collars, as a result of which the material costs increase. There are also more complex built-in fire collars which satisfy higher fire safety standards. DE 9418172 U1, for example, shows an assembly according to the prior art, in which a fire collar extends in a passage of a wall and nevertheless heats up slightly more quickly in case of fire. However, the space between the wall and the fire collar which extends in the passage does have to be filled with a material with a certain degree of fire resistance and is in this case filled with mortar or concrete.

It is therefore also an object of the invention to achieve higher fire safety standards by means of fire collars which are configured to extend in a passage of a wall in a simple manner.

This object is achieved by providing an assembly of a wall and a fire collar, according to claim 1, wherein the wall comprises a passage and the fire collar is configured to extend in this passage, wherein the fire collar is configured to envelop a plastic tube which extends through this passage and comprises intumescent material which is expandable in case of fire in order to squeeze this plastic tube shut, wherein the assembly comprises a filling agent for filling the space between the wall and the fire collar which extends in the passage, and that the filling agent has a minimum degradation temperature which is between 50°C and 150°C, and in case of fire, allows the transfer of heat in the direction of the fire collar and at least a part of the intumescent material is configured to expand in the direction of the wall and the filling agent allows said part of the intumescent material to expand in the direction of the wall in order thus to fill the said space in case of fire.

This assembly is used in order to install plastic tubes in a wall in a fire-resistant manner. The result is thus the wall with the passage, in which a plastic tube extends through this passage, in which the fire collar extends around the plastic tube at the location of the passage and thus envelops the plastic tube and in which the space between the fire collar and the wall in the passage is filled with the filling agent. This result will be maintained for as long as there is no fire. This filling agent may be made, for example, from a flammable material, such as polyurethane foam (PU foam), polyethylene foam (PE foam), polyvinyl chloride foam (PVC foam), ethylene propylene diene monomer foam (EPDM foam) or polystyrene foam (PS foam). The filling agent may also be simply air if said space is only a few millimetres wide.

The passage of the wall may have any desired shape which allows the fire collar to extend in this passage. Thus, the passage may have a circular cross section, a square cross section, etc. The intumescent material may comprise, for example, expandable graphite or sodium silicate. Other intumescent materials may also be used.

The construction of this fire collar makes it possible, in case of fire, for a part of the intumescent material to expand in the direction of the tube which envelops the fire collar. Thus, a part of the intumescent material will expand inwards in order thus to squeeze the tube shut in case of fire. However, a part of the intumescent material will expand in the direction of the wall and thus outwards in case of fire. The intumescent material of the fire collar may be formed as a single piece or may also be composed of two or more parts. Thus, the fire collar may for example comprise one body with an inwardly directed surface which envelops a body passage in which a plastic tube is designed to extend, and an outwardly directed surface which is situated opposite this inwardly directed surface. This body may then comprise an internal space which is situated between this inwardly and outwardly directed surface, with intumescent material then being disposed in this internal space. Both the inwardly directed surface and the outwardly directed surface may then be provided with openings, so that this intumescent material can expand both inwardly and outwardly. If the outwardly directed surface is not provided with openings, it is possible to additionally fit a band/strip of intumescent material against the outwardly directed surface, so that the intumescent material which is present in the internal space is intended to expand inwards and the band/strip of intumescent material is intended to expand outwards. It is also possible to fit a band/strip of intumescent material on the outer side of the body, i.e. onto the outwardly directed surface, and to also fit a band/strip of intumescent material onto the inwardly directed surface. The present invention also relates to a fire collar as such which is suitable to form part of the assembly according to the invention.

Since the filling agent makes it possible for the heat which is produced in case of fire to be (almost immediately) transmitted to the fire collar, the fire collar quickly comes into contact with the heat and the intumescent material will thus quickly heat up and thus also quickly expand. Since the intumescent material also expands in the direction of the wall and the filling agent makes it possible to fill said space, the intumescent material will quickly fill said space. In other words, the tube is quickly squeezed shut in case of fire and virtually the entire passage is quickly closed off by means of the expanding intumescent material, as a result of which fire extension is preventable for a certain amount of time and high fire safety standards are achievable by means of this assembly. At least a part of the intumescent material is thus configured to expand in the direction of the wall in case of fire in order thus to fill said space in case of fire. Using this assembly, it is possible to achieve higher fire safety standards than with the existing fire collars which are built into a wall according to the existing installation methods and in an easy way.

If a fire has taken place, therefore, the result is the wall with the passage, in which the expanded intumescent material of the fire collar has filled virtually the entire passage and has also squeezed the plastic tube virtually shut at the location of the passage.

The filling agent has a minimum degradation temperature which is between 50°C and 150°C. The term degradation is understood to refer to melting, burning away, breaking away, etc. The filling agent may be, for example, a flammable material, such as a polyurethane foam, wherein this flammable material has a minimum degradation temperature of between 50°C and 150°C. Known polyurethane foams which are used in the building industry retain their shape, for example, up to +/- 100 °C and are thus resistant to temperatures up to +/- 100°C. They will therefore degrade from +/- 100 °C. The characteristic 'the filling agent has a minimum degradation temperature which is between 50°C and 150°C' could therefore also be designated as the characteristic 'the filling agent is temperature-resistant up to a temperature which is between 50°C and 150 °C'. This assembly is used to install plastic tubes in a wall for fire protection. To this end, the fire collar and the filling agent are provided in said passage of the wall. The result is thus the wall with the passage, in which a plastic tube extends through this passage, in which the fire collar extends around the plastic tube at the location of the passage and thus envelops the plastic tube and in which the space between the fire collar and the wall in the passage is filled with the filling agent. This result will be maintained for as long as there is no fire. Since the filling agent has a minimum degradation temperature which is between 50° and 150°, and thus degrades from a temperature which is higher than a value of between 50° and 150°, this filler material will quickly degrade in case of fire. Thus, the filling agent may, for example, burn up. If the filler material degrades, said space is freed up again, as a result of which this filling agent thus allows the transfer of heat through the space in the direction of the fire collar and the fire collar therefore quickly comes into contact with the heat and the intumescent material will therefore heat up quickly and consequently will also expand quickly. Since the intumescent material also expands in the direction of the wall, this intumescent material will quickly start to fill up the freed-up space again. In other words, the tube is quickly squeezed shut in case of fire and virtually the entire passage is closed off quickly by means of the expanding intumescent material, as a result of which fire extension is preventable for a certain period of time and thus high fire safety standards are achievable by means of this assembly. At least a part of the intumescent material is thus configured to expand in the direction of the wall in case of fire and thus to fill said space in case of fire. By means of this assembly, it is possible to achieve higher fire safety standards than by means of the existing fire collars which are built into a wall according to the existing installation methods. Thus, when a fire has taken place, the result is thus the wall with the passage, in which the expanded intumescent material of the fire collar fills virtually the entire passage and also squeezes the plastic tube shut virtually completely at the location of the passage. The filling agent is at least partly and preferably virtually completely burned away/degraded. Since a filling agent with a minimum degradation temperature of between 50°C and 150°C allows transfer of heat through the space in the direction of the fire collar in case of fire and allows expansion of said part of the intumescent material in the direction of the wall in order thus to fill said space in case of fire, the filling agent in this preferred embodiment may concisely be described as follows: "the filling agent has a minimum degradation temperature of between 50°C and 150°C".

Furthermore preferably, the filling agent has a minimum degradation temperature which is between 70°C and 130°C, preferably between 80° and 120°. The intention is for the filling agent to degrade only in case of fire and therefore not at high temperatures which are caused by, for example, the weather or industrial activities which take place in the space which is partly surrounded by said wall. Also, the intention is for the filling agent to degrade sufficiently quickly in case of fire, so that the intumescent material can heat up sufficiently quickly and will thus expand quickly.

Preferably, the fire collar is a built-in fire collar which is configured to extend substantially, still more preferably completely, in the passage. The visibility of the fire collar in this case is low, as a result of which the fire collar does not adversely affect the appearance. The passage extends through the wall along a direction. The fire collar may, viewed along this direction after this fire collar has been fitted in the passage, have virtually the same dimensions as the passage. However, the dimensions of the fire collar may also be smaller than those of the passage viewed along the last-mentioned direction.

In a preferred embodiment, the filling agent is made from a flammable material. In this case, the expression a flammable material preferably denotes a material which has fire class B, C, D or E according to the European classification based on NBN EN 13501-1. Thus, the filling agent may be, for example, polyurethane foam of fire class B. A flammable material will burn up in case of fire. As a result thereof, in case of fire, said space, which was previously filled with the filling agent, is freed up again, as a result of which transfer of heat through the space becomes possible and this space can be filled again with the expanding intumescent material. Since a filling agent which is made from a flammable material allows transfer of heat through the space in the direction of the fire collar in case of fire, and allows expansion of said part of the intumescent material in the direction of the wall in order thus to fill said space in case of fire, the filling agent of this preferred embodiment may concisely be described as follows: "the filling agent is made from a flammable material".

In a preferred embodiment, the filling agent comprises a plastic foam, such as a polyurethane foam. Other possible plastic foams are PE foams, PVC foams, EPDM foams or PS foams. Preferably, the filling agent is a plastic foam. Plastic foams are simple to introduce in a space. This may be achieved, for example, by means of a spray can. Plastic foams will also closely adjoin the fire collar and the wall, so that the space between the wall and the fire collar is reliably sealed and the wall retains its separating function when a plastic tube extends through it. Furthermore preferably, these plastic foams have a density which is between 40 and 200 kg/m³. Such plastic foams are quickly flammable. Also preferably, these plastic foams have an open-cell structure, as a result of which they will quickly burn up.

Furthermore preferably, it is provided that the filling agent is introduced into said space by means of a spray can. Spray cans comprising plastic foams, such as polyurethane foams, are used for many purposes during the construction of buildings and are therefore always present on a building site. **In** addition, they are also easily available. It is thus easy to provide persons skilled in the art who will install plastic tubes through walls with such spray cans. Also, introducing plastic foams by means of spray cans is very easy and can be carried out very quickly. Most plastic foams also have a very limited curing time, as a result of which it is possible to install plastic tubes through walls for fire protection by means of such an assembly very quickly.

In a preferred embodiment, the fire collar comprises a body for containing the intumescent material, wherein this body comprises an outwardly directed surface and an inwardly directed surface situated opposite this outwardly directed surface, wherein this inwardly directed surface, in use, envelops a body passage in which a plastic tube, which is configured to extend through said passage of the wall, is configured to extend, and wherein the intumescent material comprises a strip of intumescent material which is applied to the outwardly directed surface of the body, wherein this strip of intumescent material is at least configured to expand in the direction of the wall in case of fire. In this case, the outwardly directed surface preferably forms the outer side of the body. By also applying intumescent material to the outer side of the body, it is ensured that the body will not prevent expansion of the intumescent material in the direction of the wall, and that thus the space between the fire collar and the wall, which was for example previously filled with the filling agent and is freed up again in case of fire, will quickly be filled again by the expanding intumescent material and fire extension is preventable for a period of time. The body may be designed as a single part but may also consist of several parts, such as for example two parts, with the first part comprising the outwardly directed surface and the second part comprising the inwardly directed surface, wherein these two parts are directly or indirectly connected to each other and, for example, the second part is surrounded by the first part. The body is preferably designed such that it is hingeably openable, so that the fire collar is easily fittable around a plastic tube. The outwardly directed surface may centrally comprise, for example, an incision. In this way, the strip of intumescent material can extend in this incision in such a way that the strip of intumescent material, when it has not yet expanded, does not extend beyond the body, viewed along a plane at right angles to the direction of the body passage. However, the outwardly directed surface does not have to comprise such an incision.

As mentioned earlier, the present invention also relates to a fire collar as such which is suitable to form part of the assembly according to the invention. In a specific embodiment, the present invention then also relates to a fire collar which is configured to envelop a plastic tube which extends through a passage of a wall and wherein this fire collar comprises intumescent material which is expandable in case of fire in order to squeeze a plastic tube shut, wherein the fire collar comprises a body for containing the intumescent material, wherein this body comprises an outwardly directed surface and an inwardly directed surface which is situated opposite this outwardly directed surface, wherein this inwardly directed surface, in use, envelops a body passage, in which a plastic tube which is configured to extend through a passage of the wall, is configured to extend, and wherein the intumescent material comprises a strip of intumescent material which is applied to the outwardly directed surface of the body, wherein this strip of intumescent material is at least configured to expand outwardly in case of fire, that is in the direction of the wall in use.

Furthermore preferably, the fire collar in the abovementioned preferred embodiment or in the abovementioned specific embodiment is configured to extend in the passage of the wall in such a manner that said body passage extends virtually along this passage.

Also furthermore preferably, the strip of intumescent material extends beyond the body, viewed along a plane at right angles to the direction of the body passage. In this way, this strip of intumescent material will quickly come into contact with the heat in case of fire and the body will not hamper the transfer of heat from the fire to the strip of intumescent material, or to a lesser degree.

Also furthermore preferably in a more specific embodiment, the body comprises an internal space which extends between the inwardly directed surface and the outwardly directed surface and the intumescent material comprises a second strip of intumescent material which is provided in this internal space, wherein said inwardly directed surface of the body comprises one or more openings which provide access to this internal space, so that the second strip of intumescent material is expandable through these openings in case of fire. By means of such an internal space, the second strip of intumescent material is reliably secured and this second strip does not impede the correct installation of the fire collar around a tube. The openings allow the second strip of intumescent material to expand inwardly and thus in the direction of the tube.

Furthermore yet more preferably, the maximum dimension of the first strip of intumescent material, viewed along the direction of the body passage, is smaller than the maximum dimension of the second strip of intumescent material. This ensures that this fire collar can squeeze a plastic tube shut very quickly in case of fire.

Still more preferably, the body comprises clamping elements for additionally securing the second strip of intumescent material in the internal space. These clamping elements may form, for example, end parts of the body and may be foldably connected to the rest of the body. In this way, they can partly protect the internal space by extending between the inwardly directed wall and the outwardly directed wall. These clamping elements may also be designed such that they will move outwardly when the intumescent material expands and help to protect said space in case of fire.

In a specific embodiment, the assembly comprises a plastic tube and the fire collar is configured to envelop this plastic tube in such a manner that the fire collar adjoins the tube.

In another embodiment, the assembly comprises a plastic tube and the fire collar is configured to envelop this plastic tube in such a manner that a space is present between the fire collar and the tube and the filling agent is also configured to fill this last-mentioned space. For example, when the filling agent is a plastic foam, not only said space between the wall and the fire collar will be filled with the filling agent when installing this assembly, but also the space between the fire collar and the tube will be filled with the filling agent. In case of fire, the filling agent which is present between the fire collar and the tube will then also degrade and the intumescent material which extends in the direction of the tube will start to fill the freed-up space between the fire collar and the tube and also squeeze the tube shut.

The wall is preferably a vertical wall, a ceiling or a floor and still more preferably, this wall is substantially made from one or more fire-resistant materials such as concrete, bricks, mortar, plaster etc.

In a preferred embodiment, the fire collar comprises one or more securing elements which form projecting elements of the fire collar and which are directed outwards, for additionally securing the fire collar to the wall. In principle, there is no need for any additional securing arrangement for securing the fire collar to the wall, since the space between the wall and the fire collar is filled with the filling agent, as a result of which the fire collar is held in place by the filling agent. By using securing elements, such as securing limbs, which may be secured to the wall, for example using screws, it is possible to hold the fire collar better in place when installing the fire collar in the passage, as a result of which filling with the filling agent may be effected more easily. Also, in case of fire, these securing elements ensure that the portion of the fire collar which does not consist of intumescent material, such as for example said body which is made, for example, from steel, is held in place more accurately.

This object is also achieved by providing a method for fire-resistant fitting a plastic tube through a passage in a wall, according to claim 11, wherein a fire collar comprising intumescent material which is expandable in case of fire is provided and this fire collar is fitted around the tube for squeezing the plastic tube shut in case of fire, wherein the fire collar is fitted in the passage, and the space between the fire collar and the wall which extends in the passage is filled with a filling agent, wherein, in case of fire, the filling agent allows transfer of heat in the direction of the fire collar and has a minimum degradation temperature which is between 50°C and 150°C and at least a part of the intumescent material is configured to expand in the direction of the wall and the filling agent allows said part of the intumescent material to expand in the direction of the wall in order thus to fill said space in case of fire.

For this method, there are in this case therefore a wall, a fire collar and a filling agent, wherein this wall, this fire collar and this filling agent correspond to the assembly according to the invention, as described above. In other words, by means of this method a plastic tube is thus fire-resistant fitted through a passage of a wall and the result is a wall through which said tube extends and which meets high fire safety standards and the aesthetic appearance of which is deemed to be good. The advantages described for the above-illustrated assembly also apply to this method and also the preferred embodiments of, inter alia, the fire collar and the filling agent of the assembly are also preferred embodiments for this method. Thus, the filling agent has a minimum degradation temperature which is between 50°C and 150°C.

Preferably, the filling agent comprises a plastic foam and this plastic foam is introduced into said space by means of a spray can. Introducing a plastic foam by means of a spray can is very simple and can also be carried out very quickly. This method is then also not laborious and can be carried out rapidly. In addition, it is possible to provide a plastic foam having a reduced curing time. The plastic foam may be, for example, polyurethane foam. Preferably, a polyurethane foam with a minimum degradation temperature of +/- 100 °C is used.

If the fire collar comprises one or more securing elements which form projecting elements of the fire collar and which are directed outwards, the fire collar is preferably mechanically secured to the wall by means of the securing elements and this before or during filling of the space with the filling agent.

Preferably, the fire collar is first arranged around the tube, after which the fire collar, together with the tube, is positioned in the passage in such a way that the fire collar substantially extends in the passage, after which the space between the fire collar and the wall which extends in the passage is filled with the filling agent.

The present invention will now be explained in more detail by means of the following detailed description of a preferred embodiment of an assembly and a method according to the present invention. The sole aim of this description is to give illustrative examples and to indicate further advantages and particulars, and should therefore by no means be interpreted as being a limitation of the area of application of the invention or of the patent rights defined in the claims.

In this detailed description, reference numerals are used to refer to the attached drawings, in which:

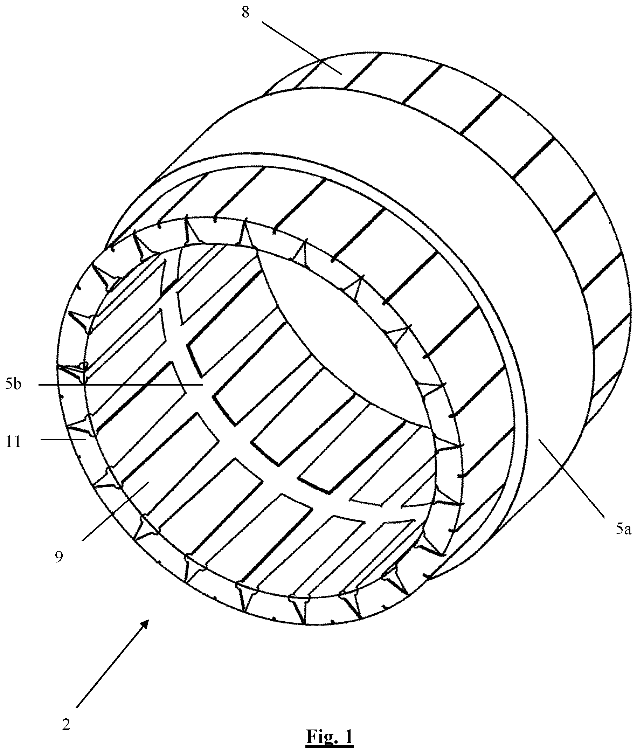

- ***Fig. 1*** shows a perspective view of a fire collar of an assembly according to the invention;

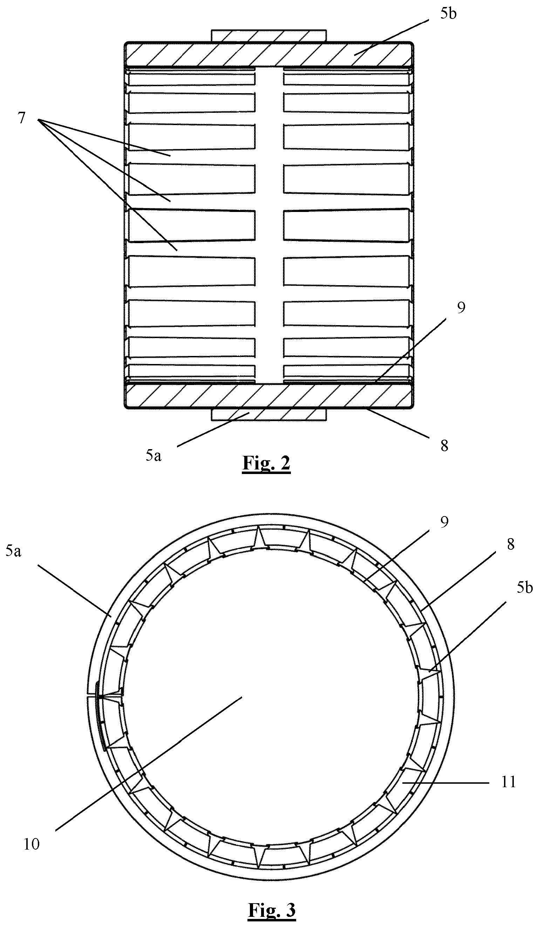

- ***Fig. 2*** shows a cross section of the fire collar illustrated in Fig. 1, along a plane which extends along the body passage of the fire collar;
- ***Fig. 3*** shows a front view of the fire collar illustrated in Fig. 1;
- ***Fig. 4*** shows a perspective view of a portion of a wall, a plastic tube and the fire collar and this during the fire-resistant installation of the plastic tube in a passage of the wall;
- ***Fig. 5*** shows a perspective view of the portion of the wall, the plastic tube and the fire collar as illustrated in Fig. 4 and this during the fire-resistant installation of the plastic tube in the passage, wherein filling agent has already been applied between the wall and the fire collar;
- ***Fig. 6*** shows a perspective view of a second embodiment of a fire collar of an assembly according to the invention.

The invention inter alia relates to a method for fire-resistant fitting a plastic tube (4) through a wall (1), such as a vertical wall (1). This is carried out by means of an assembly according to the invention.

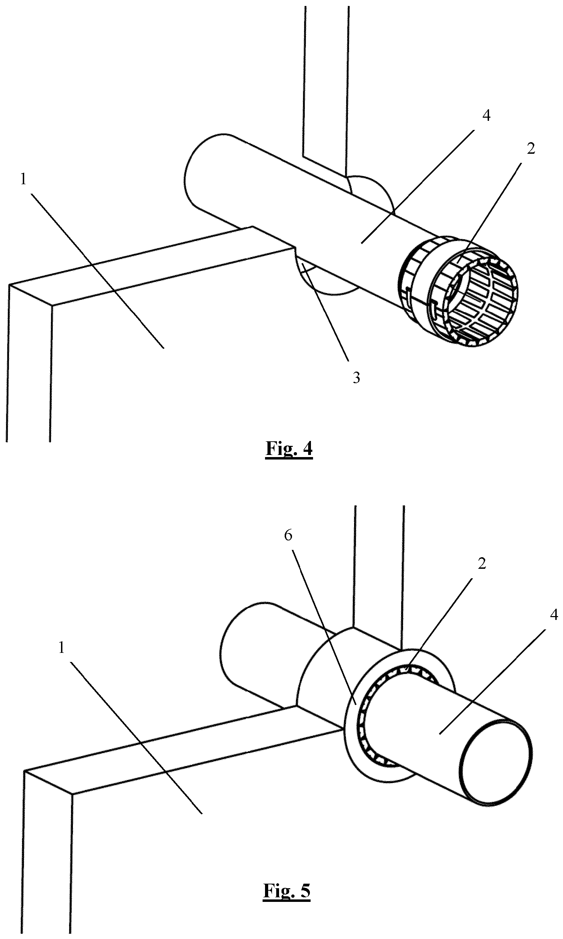

This assembly comprises the said wall (1), a fire collar (2) and a filling agent (6). In this case, the filling agent (6) is polyurethane foam which is introducible by means of a spray can. The wall (1) comprises a passage (3) having a circular cross section. The plastic tube (4) is configured to extend through this passage (3). During the installation of the tube (4) through the passage (3), the fire collar (2) is secured around the tube (4) first in such a way that this fire collar (2) envelops the tube (4). This is clearly visible in Fig. 4.

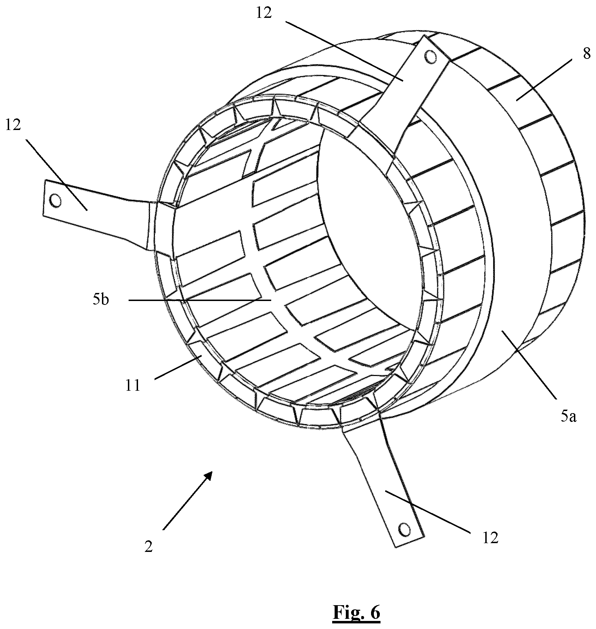

The fire collar (2) is constructed as follows. The fire collar (2) comprises a body which is made of steel. This body, if the fire collar (2) extends around the tube (4), consists of two components, being a first component which is a plate which is folded according to a cylinder and a second component which is a plate which is folded according to a cylinder and extends inside the first component. The first component comprises clamps (11) by means of which this first component is connectable to the second component in such a way that a receiving space extends between the first and the second component. The first component comprises an outwardly directed surface (8) which forms the outer side of the body and the second component comprises an inwardly directed surface (9) with openings (7) which provide access to the receiving space. To said outwardly directed surface (8), a first strip of intumescent material (5a) is applied and the receiving space itself is filled with a second strip of intumescent material (5b). Said inwardly directed surface (9) envelops a cylindrical body passage (10) which is form-fitting with the tube (4) around which the fire collar (2) is configured to extend. The fire collar (2) itself can be opened via a hinge axis which extends along the direction of the body passage (10), so that this is easily fittable around the tube (4). In the embodiment illustrated in Fig. 6, the fire collar (2) comprises additional securing elements (12) which form outwardly directed projections. By means of these securing elements (12), the fire collar (2) is additionally mechanically securable to the wall (1).

When the fire collar (2) has been fitted around the tube (4), the tube (4) or the fire collar (2) is moved until the fire collar (2) extends in said passage (3) of the wall (1). Then, the space between the fire collar (2) and the passage (3), which extends in the passage (3), is filled with the filling agent (6). Here, the filling agent (6) is polyurethane foam which is introduced into the space by means of a spray can. The space is then completely filled with the filling agent (6). This is clearly visible in Fig. 5. If the fire collar (2) is provided with said securing elements (12), the fire collar (2) is mechanically attached to the wall (1) by means of screws and these securing elements (12) and this before filling said space with the filling agent (6).

The result is the wall (1) with the passage (3), wherein the tube (4) extends through this passage (3), the tube (4) is enveloped by the fire collar (2), wherein the fire collar (2) extends in the passage (3) and wherein the space between the passage (3) and the fire collar (2), which extends in the passage (3), is filled with the filling agent (6). This wall (1) now meets high fire safety standards.

When a fire starts in the space which the wall (1) helps to surround, the temperature increases. When the temperature becomes higher than the temperature which the filling agent (6) can withstand, the filling agent (6) will start to degrade. The filling agent (6) may for example be polyurethane foam which can withstand a temperature of at most +/- 100 °C, so that the minimum degradation temperature is +/- 100 °C. As the filling agent (6) degrades, said space between the wall (1) and the fire collar (2) is freed up again and the fire collar (2), and thus the intumescent material (5a, 5b) of the fire collar (2), quickly heats up, as a result of which the intumescent material (5a, 5b) will expand. In view of the position of the first strip of intumescent material (5a), this material cannot expand inwardly and will therefore expand outwardly and thus in the direction of the wall (1). Due to the position of the second strip of intumescent material (5b), this material will expand through the openings (7) of the inwardly directed surface (9) and thus towards the tube (4). Here, the expanding intumescent material of the second strip of intumescent material (5b) will squeeze the tube (4) shut. This is simple as the tube (4) has already slightly weakened due to the increase in temperature.

The result after the fire is then the wall (1) with the passage (3), wherein virtually the entire passage (3) is filled with the expanded intumescent material, wherein the tube (4) is squeezed shut and wherein the body also still extends in the passage (3).

## Claims

1. Assembly of a wall (1) and a fire collar (2), wherein the wall (1) comprises a passage (3) and the fire collar (2) is configured to extend in this passage (3), wherein the fire collar (2) is configured to envelop a plastic tube (4) which extends through this passage (3) and comprises intumescent material (5a, 5b) which is expandable in case of fire in order to squeeze this plastic tube (4) shut, wherein the assembly comprises a filling agent (6) for filling the space between the wall (1) and the fire collar (2) which extends in the passage (3) and wherein the filling agent (6), in case of fire, allows the transfer of heat in the direction of the fire collar (2) and has a minimum degradation temperature which is between 50° C and 150°C, **characterized in that** at least a part of the intumescent material (5a, 5b) is configured to expand in the direction of the wall (1) and **in that** the filling agent (6), in case of fire, allows said part of the intumescent material (5a, 5b) to expand in the direction of the wall in order thus to fill the said space in case of fire.

2. Assembly according to one of the preceding claims, **characterized in that** the filling agent (6) is made from a flammable material.

3. Assembly according to one of the preceding claims, **characterized in that** the filling agent (6) comprises a plastic foam, such as a polyurethane foam.

4. Assembly according to one of the preceding claims, **characterized in that** the fire collar (2) comprises a body for containing the intumescent material (5a, 5b), wherein this body comprises an outwardly directed surface (8) and an inwardly directed surface (9) situated opposite this outwardly directed surface (8), wherein this inwardly directed surface (9), in use, envelops a body passage (10) in which a plastic tube (4), which is configured to extend through said passage (3) of the wall (1), is configured to extend, and wherein the intumescent material (5a, 5b) comprises a strip of intumescent material (5a) which is applied to the outwardly directed surface (8) of the body, wherein this strip of intumescent material (5a) is at least configured to expand in the direction of the wall (1) in case of fire.

5. Assembly according to Claim 4, **characterized in that** the body comprises an internal space which extends between the inwardly directed surface (9) and the outwardly directed surface (8), and the intumescent material (5a, 5b) comprises a second strip of intumescent material (5b) which is provided in this internal space, wherein said inwardly directed surface (9) of the body comprises one or more openings (7) which provide access to this internal space, so that the second strip of intumescent material (5b) is expandable through these openings (7) in case of fire.

6. Assembly according to Claim 5, **characterized in that** the maximum dimension of the first strip of intumescent material (5a), viewed along the direction of the body passage (10), is smaller than the maximum dimension of the second strip of intumescent material (5b).

7. Assembly according to Claim 5 or 6, **characterized in that** the body comprises clamping elements (11) for additionally securing the second strip of intumescent material (5b) in the internal space.

8. Assembly according to one of the preceding claims, **characterized in that** the assembly comprises a plastic tube (4) and the fire collar (2) is configured to envelop this plastic tube (4) in such a manner that the fire collar (2) adjoins the tube (4).

9. Assembly according to one of Claims 1 to 7, **characterized in that** the assembly comprises a plastic tube (4) and the fire collar (2) is configured to envelop this plastic tube (4) in such a manner that a space is present between the fire collar (2) and the tube (4) and the filling agent (6) is also configured to fill this last-mentioned space.

10. Assembly according to one of the preceding claims, **characterized in that** the fire collar (2) comprises one or more securing elements (12) which form projecting elements of the fire collar (2) and which are directed outwards, for additionally securing the fire collar (2) to the wall (1).

11. Method for fire-resistant fitting a plastic tube (4) through a passage (3) of a wall (1), wherein a fire collar (2) comprising intumescent material (5a, 5b) which is expandable in case of fire is provided and this fire collar (2) is fitted around the tube (4) for squeezing the plastic tube (4) shut in case of fire, wherein the fire collar (2) is fitted in the passage (3), and the space between the fire collar (2) and the wall (1) which extends in the passage (3) is filled with a filling agent (6) and wherein the filling agent (6), in case of fire, allows the transfer of heat in the direction of the fire collar (2) and has a minimum degradation temperature which is between 50°C and 150°C, **characterized in that** at least a part of the intumescent material (5a, 5b) is configured to expand in the direction of the wall (1) and the filling agent (6) allows said part of the intumescent material (5a, 5b) to expand in the direction of the wall in order thus to fill said space in case of fire.

12. Method according to Claim 11, **characterized in that** the filling agent (6) comprises a plastic foam and this plastic foam is introduced into said space by means of a spray can.

13. Method according to Claim 11 or 12, **characterized in that** the fire collar (2) comprises one or more securing elements which form projecting elements of the fire collar (2) and which are directed outwards, wherein the fire collar (2) is mechanically secured to the wall (1) by means of the securing elements and this before or during filling of the space with the filling agent (6).

14. Method according to one of Claims 11 to 13, **characterized in that** the fire collar (2) is first arranged around the tube (4), after which the fire collar (2), together with the tube (4), is positioned in the passage (3) in such a way that the fire collar (2) substantially extends in the passage (3), after which the space between the fire collar (2) and the wall (1) which extends in the passage (3), is filled with the filling agent (6).

## Patentansprüche

1. Anordnung einer Wand (1) und eines Brandschutzkragens (2), wobei die Wand (1) eine Passage (3) umfasst und der Brandschutzkragen (2) konfiguriert ist, um sich in diese Passage (3) zu erstrecken, wobei der Brandschutzkragen (2) konfiguriert ist, um ein Kunststoffrohr (4), welches sich durch diese Passage (3) erstreckt, zu umschließen, und anschwellendes Material (5a, 5b) umfasst, welches im Brandfall dehnbar ist, um dieses Kunststoffrohr (4) zuzudrücken, wobei die Anordnung einen Füllstoff (6) umfasst, um den Raum zwischen der Wand (1) und dem Brandschutzkragen (2), der sich in die Passage (3) erstreckt, zu füllen und wobei der Füllstoff (6) im Brandfall die Übertragung von Wärme in die Richtung des Brandschutzkragens (2) erlaubt und eine minimale Zersetzungstemperatur hat, die zwischen 50 °C und 150 °C liegt, **dadurch gekennzeichnet, dass** zumindest ein Teil des anschwellenden Materials (5a, 5b) konfiguriert ist, um sich in die Richtung der Wand (1) auszudehnen, und dadurch, dass der Füllstoff (6) es im Brandfall ermöglicht, dass sich der erwähnte Teil des anschwellenden Materials (5a, 5b) in die Richtung der Wand ausdehnt, um so den erwähnten Raum im Brandfall zu füllen.

2. Anordnung nach einem der vorigen Ansprüche, **dadurch gekennzeichnet, dass** der Füllstoff (6) aus einem brennbaren Material hergestellt ist.

3. Anordnung nach einem der vorigen Ansprüche, **dadurch gekennzeichnet, dass** der Füllstoff (6) einen Kunststoffschaum wie einen Polyurethanschaum umfasst.

4. Anordnung nach einem der vorigen Ansprüche, **dadurch gekennzeichnet, dass** der Brandschutzkragen (2) einen Körper umfasst, um das anschwellende Material (5a, 5b) zu enthalten, wobei dieser Körper eine nach außen gerichtete Oberfläche (8) und eine nach innen gerichtete Oberfläche (9), gelegen gegenüber dieser nach außen gerichteten Oberfläche (8), umfasst, wobei diese nach innen gerichtete Oberfläche (9), während der Verwendung, eine Körperpassage (10) umschließt, in der ein Kunststoffrohr (4), das konfiguriert ist, um sich durch die erwähnte Passage (3) der Wand (1) zu erstrecken, konfiguriert ist, um sich auszudehnen, und wobei das anschwellende Material (5a, 5b) einen Streifen aus anschwellendem Material (5a) umfasst, der an der nach außen gerichteten Oberfläche (8) des Körpers angebracht ist, wobei dieser Streifen aus anschwellendem Material (5a) zumindest konfiguriert ist, um sich im Brandfall in die Richtung der Wand (1) auszudehnen.

5. Anordnung nach Anspruch 4, **dadurch gekennzeichnet, dass** der Körper einen inneren Raum umfasst, der sich zwischen der nach innen gerichteten Oberfläche (9) und der nach außen gerichteten Oberfläche (8) erstreckt, und dass das anschwellende Material (5a, 5b) einen zweiten Streifen aus anschwellendem Material (5b) umfasst, der in diesem inneren Raum bereitgestellt ist, wobei die erwähnte nach innen gerichtete Oberfläche (9) des Körpers eine oder mehrere Öffnungen (7) umfasst, die Zugang zu diesem inneren Raum bieten, sodass der zweite Streifen aus anschwellendem Material (5b) im Brandfall durch diese Öffnungen (7) dehnbar ist.

6. Anordnung nach Anspruch 5, **dadurch gekennzeichnet, dass** die größte Abmessung des ersten Streifens aus anschwellendem Material (5a), betrachtet entlang der Richtung der Körperpassage (10), kleiner ist als die größte Abmessung des zweiten Streifens aus anschwellendem Material (5b).

7. Anordnung nach Anspruch 5 oder 6, **dadurch gekennzeichnet, dass** der Körper Klemmelemente (11) zum zusätzlichen Befestigen des zweiten Streifens aus anschwellendem Material (5b) im inneren Raum umfasst.

8. Anordnung nach einem der vorigen Ansprüche, **dadurch gekennzeichnet, dass** die Anordnung ein Kunststoffrohr (4) umfasst und der Brandschutzkragen (2) konfiguriert ist, um dieses Kunststoffrohr (4) so zu umschließen, dass der Brandschutzkragen (2) an das Rohr (4) angrenzt.

9. Anordnung nach einem der Ansprüche 1 bis 7, **dadurch gekennzeichnet, dass** die Anordnung ein Kunststoffrohr (4) umfasst und der Brandschutzkragen (2) konfiguriert ist, um dieses Kunststoffrohr (4) so zu umschließen, dass ein Raum zwischen dem Brandschutzkragen (2) und dem Rohr (4) vorhanden ist und der Füllstoff (6) auch konfiguriert ist, um diesen letztgenannten Raum zu füllen.

10. Anordnung nach einem der vorigen Ansprüche, **dadurch gekennzeichnet, dass** der Brandschutzkragen (2) ein oder mehrere Befestigungselemente (12) umfasst, welche vorragende Elemente des Brandschutzkragens (2) formen und die nach außen gerichtet sind, um den Brandschutzkragen (2) zusätzlich an der Wand (1) zu befestigen.

11. Verfahren zur feuerbeständigen Montage eines Kunststoffrohres (4) durch eine Passage (3) einer Wand (1), wobei ein Brandschutzkragen (2), welcher anschwellendes Material (5a, 5b) umfasst, das im Brandfall dehnbar ist, bereitgestellt ist und dieser Brandschutzkragen (2) um das Rohr (4) montiert ist, um das Kunststoffrohr (4) im Brandfall zuzudrücken, wobei der Brandschutzkragen (2) in der Passage (3) montiert ist, und der Raum zwischen dem Brandschutzkragen (2) und der Wand (1), der sich in die Passage (3) erstreckt, mit einem Füllstoff (6) gefüllt wird und wobei der Füllstoff (6) im Brandfall die Übertragung von Wärme in die Richtung des Brandschutzkragens (2) erlaubt und eine minimale Zersetzungstemperatur hat, die zwischen 50 °C und 150 °C liegt, **dadurch gekennzeichnet, dass** zumindest ein Teil des anschwellenden Materials (5a, 5b) konfiguriert ist, um sich in die Richtung der Wand (1) auszudehnen, und der Füllstoff (6) es ermöglicht, dass sich der erwähnte Teil des anschwellenden Materials (5a, 5b) in die Richtung der Wand ausdehnt, um so den erwähnten Raum im Brandfall zu füllen.

12. Verfahren nach Anspruch 11, **dadurch gekennzeichnet, dass** der Füllstoff (6) einen Kunststoffschaum umfasst und dieser Kunststoffschaum mittels einer Sprühdose in den erwähnten Raum eingebracht wird.

13. Verfahren nach Anspruch 11 oder 12, **dadurch gekennzeichnet, dass** der Brandschutzkragen (2) ein oder mehrere Befestigungselemente umfasst, welche vorragende Elemente des Brandschutzkragens (2) bilden und die nach außen gerichtet sind, wobei der Brandschutzkragen (2) mechanisch mittels der Befestigungselemente an der Wand (1) befestigt ist und das vor oder während des Befüllens des Raums mit dem Füllstoff (6).

14. Verfahren nach einem der Ansprüche 11 bis 13, **dadurch gekennzeichnet, dass** der Brandschutzkragen (2) zuerst rund um das Rohr (4) angeordnet wird, wonach der Brandschutzkragen (2), zusammen mit dem Rohr (4), so in der Passage (3) positioniert wird, dass sich der Brandschutzkragen (2) im Wesentlichen in die Passage (3) erstreckt, wonach der Raum zwischen dem Brandschutzkragen (2) und der Wand (1), der sich in die Passage (3) erstreckt, mit dem Füllstoff (6) gefüllt wird.

## Revendications

1. Ensemble d'une paroi (1) et d'un collier pare-feu (2), dans lequel la paroi (1) comprend un passage (3) et le collier pare-feu (2) est configuré pour s'étendre dans ce passage (3), dans lequel le collier pare-feu (2) est configuré pour envelopper un tube en plastique (4) qui s'étend à travers ce passage (3) et comprend un matériau intumescent (5a, 5b) qui se dilate en cas d'incendie afin de comprimer le tube en plastique (4) fermé, dans lequel l'ensemble comprend un agent de remplissage (6) pour remplir l'espace entre la paroi (1) et le collier pare-feu (2) s'étendant dans le passage (3), et dans lequel l'agent de remplissage (6), en cas d'incendie, permet le transfert de chaleur dans la direction du collier pare-feu (2) et présente une température de dégradation minimale comprise entre 50°C et 150°C, **caractérisé en ce qu'**au moins une partie du matériau intumescent (5a, 5b) est configurée pour se dilater dans la direction de la paroi (1) et **en ce que** l'agent de remplissage (6), en cas d'incendie, permet à ladite partie du matériau intumescent (5a, 5b) de se dilater dans la direction de la paroi afin de remplir ainsi ledit espace en cas d'incendie.

2. Ensemble selon l'une des revendications précédentes, **caractérisé en ce que** l'agent de remplissage (6) est fabriqué à partir d'un matériau inflammable.

3. Ensemble selon l'une des revendications précédentes, **caractérisé en ce que** l'agent de remplissage (6) comprend une mousse plastique, telle qu'une mousse polyuréthane.

4. Ensemble selon l'une des revendications précédentes, **caractérisé en ce que** le collier pare-feu (2) comprend un corps destiné à contenir le matériau intumescent (5a, 5b), dans lequel le corps comprend une surface dirigée vers l'extérieur (8) et une surface dirigée vers l'intérieur (9) située en face de cette surface dirigée vers l'extérieur (8), dans lequel la surface dirigée vers l'intérieur (9), en utilisation, enveloppe un passage de corps (10) dans lequel un tube en plastique (4), configuré pour s'étendre à travers ledit passage (3) de la paroi (1), est configuré pour s'étendre, et dans lequel le matériau intumescent (5a, 5b) comprend une bande de matériau intumescent (5a) qui est appliquée sur la surface dirigée vers l'extérieur (8) du corps, dans lequel cette bande de matériau intumescent (5a) est au moins configurée pour s'étendre dans la direction de la paroi (1) en cas d'incendie.

5. Ensemble selon la revendication 4, **caractérisé en ce que** le corps comprend un espace interne qui s'étend entre la surface dirigée vers l'intérieur (9) et la surface dirigée vers l'extérieur (8), et le matériau intumescent (5a, 5b) comprend une seconde bande de matériau intumescent (5b) qui est prévue dans cet espace interne, dans lequel ladite surface dirigée vers l'intérieur (9) du corps comprend une ou plusieurs ouvertures (7) qui permettent d'accéder à cet espace interne, de sorte que la seconde bande de matériau intumescent (5b) puisse se dilater à travers ces ouvertures (7) en cas d'incendie.

6. Ensemble selon la revendication 5, **caractérisé en ce que** la dimension maximale de la première bande de matériau intumescent (5a), vue le long de la direction du passage de corps (10), est inférieure à la dimension maximale de la seconde bande de matériau intumescent (5b).

7. Ensemble selon la revendication 5 ou 6, **caractérisé en ce que** le corps comprend des éléments de serrage (11) pour fixer en outre la seconde bande de matériau intumescent (5b) dans l'espace interne.

8. Ensemble selon l'une des revendications précédentes, **caractérisé en ce que** l'ensemble comprend un tube en plastique (4) et le collier pare-feu (2) est configuré pour envelopper ce tube en plastique (4) de telle sorte que le collier pare-feu (2) soit adjacent au tube (4).

9. Ensemble selon l'une des revendications 1 à 7, **caractérisé en ce que** l'ensemble comprend un tube en plastique (4) et le collier pare-feu (2) est configuré pour envelopper ce tube en plastique (4) de telle sorte qu'un espace soit présent entre le collier pare-feu (2) et le tube (4) et l'agent de remplissage (6) est également configuré pour remplir ce dernier espace.

10. Ensemble selon l'une des revendications précédentes, **caractérisé en ce que** le collier pare-feu (2) comprend un ou plusieurs éléments de fixation (12) qui forment des éléments en saillie du collier pare-feu (2) et qui sont dirigés vers l'extérieur, pour fixer en outre le collier pare-feu (2) à la paroi (1).

11. Procédé de fixation pare-feu d'un tube en plastique (4) à travers un passage (3) d'une paroi (1), comprenant un collier pare-feu (2) comprenant un matériau intumescent (5a, 5b) qui se dilate en cas d'incendie et ce collier pare-feu (2) est monté autour du tube (4) afin de comprimer le tube en plastique (4) et de le fermer en cas d'incendie, dans lequel le collier pare-feu (2) est positionné dans le passage (3), et l'espace entre le collier pare-feu (2) et la paroi (1) qui s'étend dans le passage (3) est rempli d'un agent de remplissage (6) et dans lequel l'agent de remplissage (6), en cas d'incendie, permet le transfert de chaleur en direction du collier pare-feu (2) et présente une température de dégradation minimale comprise entre 50°C et 150°C, **caractérisé en ce qu'**au moins une partie du matériau intumescent (5a, 5b) est configurée pour se dilater en direction de la paroi (1), et **en ce que** l'agent de remplissage (6) permet à ladite partie du matériau intumescent (5a, 5b) de se dilater dans la direction de la paroi afin de remplir ainsi ledit espace en cas d'incendie.

12. Procédé selon la revendication 11, **caractérisé en ce que** l'agent de remplissage (6) comprend une mousse plastique et cette mousse plastique est introduite dans ledit espace au moyen d'une bombe aérosol.

13. Procédé selon la revendication 11 ou 12, **caractérisé en ce que** le collier pare-feu (2) comprend un ou plusieurs éléments de fixation qui forment des éléments en saillie du collier pare-feu (2) et qui sont dirigés vers l'extérieur, dans lequel le collier pare-feu (2) est fixé mécaniquement à la paroi (1) au moyen des éléments de fixation et ce avant ou pendant le remplissage de l'espace avec l'agent de remplissage (6).

14. Procédé selon l'une des revendications 11 à 13, **caractérisé en ce que** le collier pare-feu (2) est d'abord agencé autour du tube (4), après quoi le collier pare-feu (2), avec le tube (4), est positionné dans le passage (3) de telle sorte que le collier pare-feu (2) s'étend sensiblement dans le passage (3), après quoi l'espace entre le collier pare-feu (2) et la paroi (1) qui s'étend dans le passage (3) est rempli avec l'agent de remplissage (6).
